# EUROPEAN PATENT SPECIFICATION

(11) **EP 2 614 758 B1**
(45) Date of publication and mention of the grant of the patent: **21.01.2015**
(21) Application number: 12181948.6
(22) Date of filing: 28.08.2012
(51) Int. Cl.: A47J 31/06, A47J 31/44

(54) **Coffee machine**
Kaffeemaschine
Machine à café

(30) Priority: 16.01.2012 CN 201220018175 U
(43) Date of publication of application: 17.07.2013
(73) Proprietor: Midea Group Co., Ltd., Foshan City, Guangdong 440600 (CN)
(72) Inventor: Wang, Ridong, 440600 Foshan City Guangdong (CN); Liu, Zhonghua, 440600 Foshan City Guangdong (CN); Jin, Huan, 440600 Foshan City Guangdong (CN)
(74) Representative: Petraz, Gilberto Luigi

(56) References cited:
- EP-A1- 1 498 059
- WO-A1-03/101860
- DE-U1-202005 007 032

## Description

### FIELD OF THE INVENTION

The present invention relates to a coffee machine, more particularly to a foaming device of a coffee machine.

### BACKGROUND OF THE INVENTION

Rich and fine coffee foam produced by coffee machines, especially by coffee machines using a coffee pod, is closely related to foaming devices used therein. Foaming technologies of the coffee machines, according to foaming principles, can be classified as vortex technology, spoiling technology and jet impingement technology.

Conventionally, coffee machines using a coffee pod are equipped with foaming devices so as to produce satisfactory coffee liquid. However, these foaming technologies only use the vortex technology or the spoiling technology or the jet impingement technology individually. Some coffee machines on the market use filter screens to produce foam (see document EP-A-1 498 059). The coffee machine allows the coffee jet to pass through the filter screen. As the coffee jet is thin and ejection speed is fast, the foam is not rich or fine enough after the coffee jet hits the filter screen and hard to meet the high quality requirement of consumers.

### SUMMARY OF THE INVENTION

One objective of the invention is to provide a coffee machine with reverse filtration function and the coffee machine is able to produce rich and fine coffee foam.

To achieve the above objective, there is provided a coffee machine, comprising a coffee foaming device, a coffee holder to hold a coffee pod and a coffee receiver disposed under the coffee holder. The coffee foaming device includes a nozzle disposed on the coffee holder and a coffee receiving chamber disposed on coffee holder. The coffee receiving chamber is provided with at least one filter screen with meshes and each filter screen is disposed with a through hole allowing the coffee ejected from the nozzle to pass through.

The coffee receiving chamber is formed by vertical sidewalls formed on the coffee holder. An exhausting exit is provided to the sidewalls of the coffee receiving chamber to allow coffee to flow through. The exhausting exit is preferably disposed on the coffee receiving chamber to face an outlet of the coffee receiver.

The filter screen further includes fasteners disposed at the edge of the filter screen to clamp to the coffee receiving chamber.

The filter screen is fixedly disposed at the top of the coffee receiving chamber via a filter screen support.

The filter screen is made of metal materials.

In the present invention, the top of the coffee receiving chamber is disposed with a filter screen. After the coffee jet is ejected from the nozzle to produce foam for the first time, it passes through the through hole of the filter screen to enter into the coffee receiving chamber. It carries out vortex rotation to produce more foam for the second time. When the coffee liquid is accumulated, the coffee liquid passes through the filter screen on the top of the coffee receiving chamber again to fully mix with air to produce foam for the third time, and in the meanwhile, bigger foam produced previously is divided into rich and fine smaller foam. The present invention uses reverse filtration technology to produce foam for three times; therefore the produced coffee quality is improved and flavor becomes better.

### BRIEF DESCRIPTION OF THE DRAWINGS

FIG. **1** is a structural assembly of the invention.
FIG. **2** is a structural view of a coffee receiver of the invention.
FIG. **3** is a structural view of a filter screen of the invention.
FIG. **4** is a structural view of a filter screen support of the invention;
FIG. **5** is a sectional view of a brewing unit of the invention; and
FIG. **6** is an enlarged view of part A of FIG. **5****.**

### DETAILED DESCRIPTION OF THE EMBODIMENTS

The present invention is described in further detail below with reference to attached drawings and embodiments.

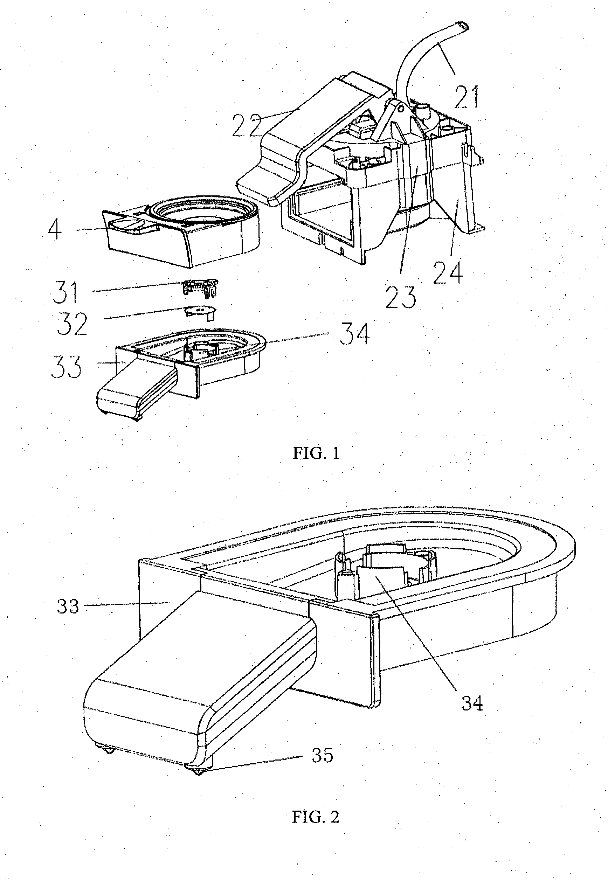

As shown in FIG. **1****,** a coffee machine comprises a brewing unit and a handle **22** disposed on the brewing unit. The brewing unit includes a base **24** and a brewing head support **23** clamped on the base **24.** The base **24** and the brewing head support **23** form a cavity, i.e. a brewing chamber, inside which is disposed with a coffee holder **4** to hold a coffee pod **43** and a coffee receiver **33** disposed under the coffee holder **4.**

The coffee machine provided by the invention further comprises a foaming device connected with the coffee holder **4** and the coffee receiver **33.** The foaming device includes a nozzle **41** disposed on the coffee holder **4** and a coffee receiving chamber **34** disposed on the coffee receiver **33.** The coffee receiving chamber **34** is provided with at least one filter screen **32** with meshes and each filter screen **32** is disposed with a through hole **321** allowing the coffee ejected from the nozzle **41** to pass through.

The nozzle **41** provided by the invention is disposed with a nozzle hole **42.** The water in the water tank (not shown) of the coffee machine enters into the brewing chamber through a water inlet **21** after being heated by a heating device (not shown). The water passes through the a coffee pod **43** held in the coffee holder **4** to form coffee extract, which flows out of the nozzle hole **42** through the nozzle **41** to form a coffee jet. As it is known that liquid flow rate is increased as a function of the size of the nozzle hole. The size of the nozzle hole **42** needs not to be specifically limited as long as the above purpose is achieved. The nozzle hole **42** is disposed corresponding to the through hole **321** of the filter screen **32** so as to allow the coffee jet ejected from the nozzle hole **42** to pass through the through hole **321** of the filter screen **32.**

As shown in FIG. **2****,** the coffee receiving chamber **34** provided by the invention is a chamber formed by the vertical sidewalls formed on the coffee receiver **33.** The size and shape of the chamber need not to be specifically limited as long as the coffee extract liquid can be temporarily retained. In order to prevent the coffee liquid from being kept in the coffee receiving chamber **34** after brewing to cause deterioration and affect coffee quality made next time, the sidewall of the coffee receiving chamber **34** is provided with an exhausting exit **37.** The number of the exhausting exit **37** may be one or more. The position of the exhausting exit **37** on the sidewall of the coffee receiving chamber **34** is preferably facing an outlet. **35** of the coffee receiver. Because the inner surface of the coffee receiver **33** slightly inclines to the exhausting exit **37**, it ensures that the horizontal position of the exhausting exit **37** is lightly lower than that of the coffee receiving chamber **34**, so that coffee liquid can easily flow out. The exhausting exit **37** is mainly used to discharge the coffee liquid left in the coffee receiving chamber **34**, which can temporarily hold the coffee liquid at the same time. The maximum value of the exhausting exit **37** is determined by the size of the coffee receiving chamber **34** and the speed of the coffee jet, which is well known in the art and it is not necessary to limit the maximum value. The minimum value of the exhausting exit **37** is also not limiting as long as it is allowable for discharging the coffee liquid, which is well known in the art.

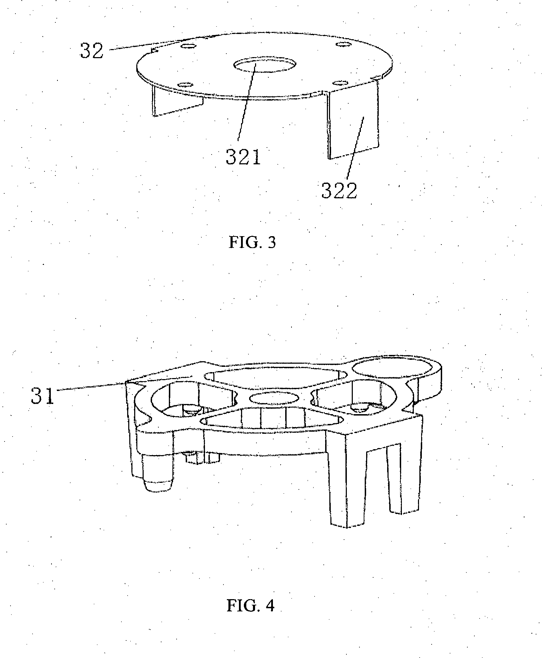

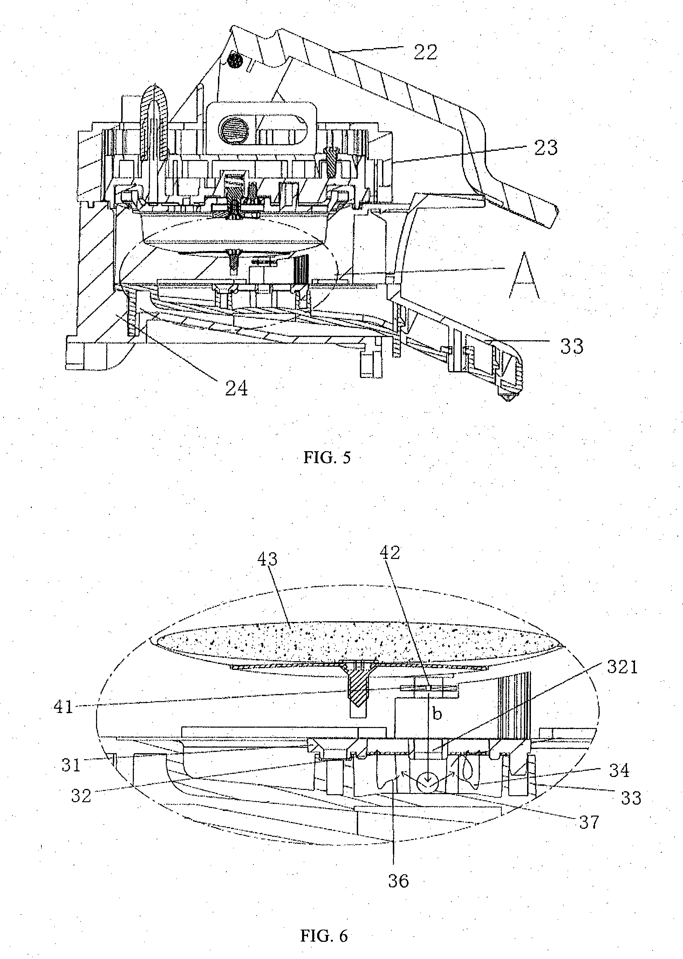

As shown in FIG. **3** and **4**, the filter screen **32** (meshes on the filter screen are shown in FIG. **6**) is preferably made of, for example, but not limited to, metal materials. The middle portion of the filter screen **32** is provided with a through hole **321**. The edge of the filter screen **32** is provided with fasteners **322**, through which the filter screen is fixedly disposed on the coffee receiving chamber **34**. In order to ensure the engagement of the filter screen **32**, the coffee receiving chamber **34** is also provided with a filter screen support **31** to fix the filter screen **32.**

The present invention is operated as follows. As show in FIGs. **5** and **6****,** hot water enters into the brewing chamber through the water inlet **21** and the coffee extract is formed after the water flows through the a coffee pod **43.** The coffee extract forms coffee jet through the nozzle hole **42** on the nozzle **41.** As the coffee jet has a certain speed, it forms air bubbles as it is ejected. The coffee jet passes through the through hole **321** of the filter screen **32** in the direction of the arrow b to hit the bottom of the coffee receiving chamber **34.** The coffee liquid is accumulated in the coffee receiving chamber **34** to form vortex rotation. New coffee foam is produced due to the vortex rotation. The coffee liquid passes through the filter screen **32** on the top of the coffee receiving chamber **34** along the direction of an arrow **36** to fully mix with air and form new air bubbles. Meanwhile bigger foam formed previously is divided into smaller foam by means of the filter screen **32.** Finally, the coffee liquid with fine foam flows out of the outlet **35** of the coffee receiver **33.** When the brewing cycle is completed, the coffee liquid retained in the coffee receiving chamber **34** flows out of the exhausting exit **37** to prevent the coffee liquid from being retained for a long time to cause deterioration.

The above description shows the preferred embodiments of the invention and is not intended to limit the invention. It should be noted that changes and modifications may be made without departing from the invention in its broader aspects which fall within the scope of the claims.

## Claims

1. A coffee machine, comprising:
a coffee foaming device,
a coffee holder (**4**) to hold a coffee pod (**43**), and
a coffee receiver (**33**) disposed under the coffee holder (**4**),
the coffee foaming device including a nozzle (**41**) disposed on the coffee holder (**4**) and a coffee receiving chamber (**34**) disposed on the coffee receiver(**33**),
wherein
the coffee receiving chamber **(34)** is provided with at least one filter screen (**32**) having meshes, **characterized in that** each of the at least one filter screen **(32)** is provided with a through hole (**321**) allowing the coffee ejected from the nozzle (**41**) to pass through.

2. The coffee machine of claim **1, characterized in that** the coffee receiving chamber (**34**) is defined by vertical sidewalls formed on the coffee receiver (**33**).

3. The coffee machine of claim **2, characterized in that** an exhausting exit (**37**) is provided on sidewalls of the coffee receiving chamber (**34**) to allow coffee to flow through.

4. The coffee machine of claim **3, characterized in that** the exhausting exit (**37**) is disposed on the coffee receiving chamber (**34**), facing towards an outlet (**35**) of the coffee receiver (33).

5. The coffee machine of claim **1, characterized in that** the filter screen **(32)** includes fasteners (**322**) disposed at the edge of the filter screen **(32)** for clamping to the coffee receiving chamber (**34**).

6. The coffee machine of claim **1, characterized in that** the filter screen **(32)** is fixedly disposed at the top of the coffee receiving chamber **(34)** via a filter screen support (**31**).

7. The coffee machine of claim **4** or **5, characterized in that** the filter screen (**32**) is made of metal materials.

## Patentansprüche

1. Kaffeemaschine, umfassend:
eine Kaffeeschäumeinrichtung,
einen Kaffeehalter (4) zum Halten eines Kaffeepads (43), und
einen Kaffeesammler (33), der unter dem Kaffeehalter (4) angeordnet ist,
worin die Kaffeeschäumeinrichtung eine an dem Kaffeehalter (4) angeordnete Düse (41) und eine an dem Kaffeesammler (33) angeordnete Kaffeesammelkammer (34) einschließt, worin
die Kaffeesammelkammer (34) mit zumindest einem Filtersieb (32) versehen ist, das Maschen aufweist, **dadurch gekennzeichnet, dass** jedes des zumindest einen Filtersiebs (32) mit einem Durchgangsloch (321) versehen ist, das dem von der Düse (41) ausgestoßenen Kaffee durchzufließen ermöglicht.

2. Kaffeemaschine nach Anspruch 1, **dadurch gekennzeichnet, dass** die Kaffeesammelkammer (34) durch vertikale Seitenwände definiert ist, die am Kaffeesammler (33) ausgebildet sind.

3. Kaffeemaschine nach Anspruch 2, **dadurch gekennzeichnet, dass** ein Austrittsauslass (37) an Seitenwänden der Kaffeesammelkammer (34) vorgesehen ist, um Kaffee durchzufließen zu ermöglichen.

4. Kaffeemaschine nach Anspruch 3, **dadurch gekennzeichnet, dass** der Austrittsauslass (37) an der Kaffeesammelkammer (34) angeordnet und einem Auslass (35) des Kaffeesammlers (33) zugewandt ist.

5. Kaffeemaschine nach Anspruch 1, **dadurch gekennzeichnet, dass** das Filtersieb (32) Befestigungselemente (322) einschließt, die am Rande des Filtersiebs (32) zum Einspannen an der Kaffeesammelkammer (34) angeordnet sind.

6. Kaffeemaschine nach Anspruch 1, **dadurch gekennzeichnet, dass** das Filtersieb (32) oben auf der Kaffeesammelkammer (34) durch eine Filtersiebabstützung (31) fest angeordnet ist.

7. Kaffeemaschine nach Anspruch 4 oder 5, **dadurch gekennzeichnet, dass** das Filtersieb (32) aus Metallmaterialien besteht.

## Revendications

1. Machine à café, comprenant:
un dispositif mousseur de café,
un porte-café (4) portant une dosette de café (43), et
un récepteur de café (33) situé au-dessous du porte-café (4),
le dispositif mousseur de café comprenant une buse (41) située sur le porte-café (4) et une chambre de réception de café (34) située sur le récepteur de café (33),
dans lequel
la chambre de réception de café (34) est pourvue d'au moins un tamis (32) à mailles, **caractérisée en ce que** chacun des au moins un tamis (32) est pourvu d'un trou débouchant (321) permettant le passage du café éjecté hors de la buse (41).

2. Machine à café selon la revendication 1, **caractérisée en ce que** la chambre de réception de café (34) est définie par des parois latérales formées sur récepteur de café (33).

3. Machine à café selon la revendication 2, **caractérisée en ce qu'**une sortie de décharge (37) est prévue sur les parois latérales de la chambre réceptrice de café (34) pour permettre l'écoulement du café.

4. Machine à café selon la revendication 3, **caractérisée en ce que** la sortie de décharge (37) est située sur la chambre de réception de café (34) et fait face à une sortie (35) du récepteur de café (33).

5. Machine à café selon la revendication 1, **caractérisée en ce que** le tamis (32) comprend des éléments de fixation (322) situés au bord du tamis (32) pour le serrer à la chambre de réception de café (34).

6. Machine à café selon la revendication 1, **caractérisée en ce que** le tamis (32) est placé de manière fixe au sommet de la chambre réceptrice de café (34) avec l'interposition d'un porte-tamis (31).

7. Machine à café selon la revendication 4 ou 5, **caractérisé en ce que** le tamis (32) est en métal.
